# EUROPEAN PATENT SPECIFICATION

(11) **EP 2 720 391 B1**
(45) Date of publication and mention of the grant of the patent: **14.01.2015**
(21) Application number: 12188368.0
(22) Date of filing: 12.10.2012
(51) Int. Cl.: H04J 3/16

(54) **Optical transport network power-save technique based on client signal information**
Optisches Transportnetzwerk-Energieeinsparungstechnik basierend auf der Kundensignalinformation
Technique d'économie d'énergie d'un réseau de transport optique sur la base des informations de signal de client

(43) Date of publication of application: 16.04.2014
(73) Proprietor: ALCATEL LUCENT, 92100 Boulogne-Billancourt (FR)
(72) Inventor: Schlenk, Ralph, 91054 Erlangen (DE)
(74) Representative: Wetzel, Emmanuelle

(56) References cited:
- EP-A1- 2 166 777
- WO-A1-2011/150983
- US-A1- 2011 170 864

## Description

The present document proposes methods and devices for an optical transport network for load-adaptive adjustment of processing resources.

Communication infrastructure consumes a growing amount of energy. Recent studies have shown that particularly backbone networks (IP and optical) will experience a disproportionate growth, making them a target for energy reduction measures.

A prior art method to reduce network power consumption is disclosed in WO2011/150983 A1, 8 December 2011

When searching for ways to decrease this energy consumption, the most promising mechanism is that of a load-adaptive network operation mode in which the transport capacity provisioned by the network would be tuned to the actual demand. This is not the case in today's practice. Depending on the actual traffic, load-adaptive network elements would be operated at lower than peak performance or even set to sleep states.

Today's (packet-based) Ethernet/IP/Multiprotocol Label Switching (MPLS) network elements already exhibit some load-adaptive features, such as Energy Efficient Ethernet (EEE, IEEE 802.3az), or MPLS Automatic Bandwidth Adjustment. However, the circuit-based transport infrastructure, the Optical Transport Network (OTN), is agnostic to its client signals in the sense that the underlying OTN circuits are always active, even if no client traffic is sent or client interfaces are in sleep mode.

In the OTN (as specified in ITU-T G.709), the Optical Data Unit (ODU) is the container defined to transport client signals from network ingress to network egress. When packet flows are considered as clients, the originally defined fixed rate ODU types show limitations in terms of efficiency. For this reason, ODUflex has been introduced in the OTN standard (according to the version of Dec 2009) in order to flexibly resize containers to adjust to changes in traffic patterns. The Generic Framing Procedure (GFP), was defined to encapsulate packet oriented data and map it into a so-called ODUflex. Additionally, a hitless rate adjustment protocol was defined to manage ODU resizing across an end-to-end network connection (ITU-T G.7044).

In order to react to changes in packet traffic patterns, an appropriate form of user network interface (UNI) signalling between an IP/MPLS (client) and an OTN (server) network layer needs to be defined. The UNI interface has been specified, e.g. in RFC 4208 or OIF UNI2.0, however, the required UNI extensions for IP/MPLS tunnel bandwidth signalling are still missing in the standards.

While the combination of MPLS Automatic Bandwidth Adjustement, enhanced UNI signalling, and ODUflex resizing could be used to operate optical transport equipment in a more energy-efficient manner in the future, it must be noted that ODUflex resizing was designed to address longer term changes that occur over a period of months or years and represents a network protocol that needs to be supported by all intermediate network elements.

In view of the above problems of the prior art, there is a need to provide methods and devices for an optical transport network being capable of reducing the power consumption of optical transport networks. In particular, it is a need to provide a mechanism that addresses also short-term packet rate variations, that is independent from third-party equipment and/or sub-networks within the transmission path, and that can also be used independent from IP/MPLS router signalling capabilities.

In accordance with an aspect, a mechanism is proposed to make the operation of the - usually static - Optical Transport Network more adaptive to the Ethernet client layer. In doing so, the equipment can be set to low-energy states during periods of inactivity.

In accordance with this aspect, a method of reducing power consumption of an optical transport network is proposed. The optical transport network comprises a first communication node configured to provide an interface between a client, e.g. an Ethernet client, and the optical transport network. The interface may be a packet-based interface. Optical data units that comprise an overhead area and a payload area are generated at the first communication node. Ingress data is encapsulated into frames and said frames are mapped into the optical data units. It will be appreciated that the subject-matter is not restricted to any particular mapping method. Preferably, the ingress data are encapsulated into frames using the Generic Framing Procedure. By way of example, if the Ethernet data are not transmitted as packets but as a Constant Bit Rate signal (CBR), the Generic Mapping Procedure (GMP) may be used to encapsulate ingress data.

In accordance with an aspect, the method comprises the step of determining, at said first communication node, whether or not ingress data is currently being received that needs to be encapsulated into frames.

In accordance with this aspect, whether or not ingress data from the client interface is currently being received at said first communication node may be determined based on a received signal from a client router or switch indicating a transition to a power save mode or a laser shutdown of the client router or switch. Alternatively, whether or not ingress data from the client interface is currently being received at said first communication node may be determined based on a packet counter or metering unit provided within said first communication unit.

If it has been determined or as long as it is determined that no ingress data is currently being received at said first communication node, power reduction measures are applied at said first communication node. For example, available data processing resources at said first communication node may be reduced or switched off by reducing the clock rate or even disabling it, dynamic voltage scaling, transmitting zeros instead of toggling data, switching off some of the available parallel resources, such a as memory units etc.

In accordance with an aspect, if it has been determined or as long as it is determined that no ingress data is currently being received at said first communication node, an indicator is inserted in the overhead area of an optical data unit, wherein the inserted indicator indicates that the payload area of said optical data unit does not contain any valid payload data. The inserted indicator may be a flag that is set at a predetermined position within the overhead of the optical data unit. The optical data unit may be transmitted from said first communication node to another communication node of the optical transport network.

The inserted indicator may then be used in downstream communication nodes of the optical transport network to determine whether or not processing of payload data is required without the need of a frame-by-frame analysis of the payload data or idle frames. In other words, by adding or setting an indicator in the overhead area of an optical data unit, the proposed method can indicate to a downstream processing resource of the optical transport network whether or not the received optical data unit contains any (valid) payload data based on which the downstream processing resource may de-activate or reduce available processing resources for the optical data unit and does not have to process payload data consisting of empty frames, only.

The optical transport network may comprise a second communication node being configured to receive ingress optical data units from an upstream communication node and to transmit egress optical data units to a downstream communication node of the optical transport network. The second communication node may multiplex and demultiplex optical data unit signals into or from different optical data unit types at said second communication node. In other words, the second communication node provides an inter-domain or intra-domain interface between two communication nodes of the optical transport network. In accordance with this aspect, the method may further comprise the steps of determining if the overhead area of an ingress optical data unit received at said second communication node comprises the indicator that indicates that the payload area of said optical data unit does not contain any valid payload data. If it has been determined based on the inserted indicator that the ingress optical data unit received at said second communication node does not contain any valid payload data, the method may comprise the step of reducing or switching off of available data processing resources at said second communication node.

In accordance with an aspect, the method may comprise the step of inserting a predetermined block of idle frames into the payload area of optical data units that comprise the inserted indicator in the overhead area at the first and/ or the second communication node. Inserting a complete predetermined block of idle frames is significantly more resource-efficient than inserting idle frames on a frame-by-frame basis. It is particular advantageous if the predetermined block of idle frames is programmed into an application-specific integrated circuit or a field-programmable gate array of the first and/ or the second communication node so that no memory access or additional energy consumption is required. Inserting a complete predetermined block of idle frames has the further advantage that the optical data unit forwarded by the communication node is conform to the standard so that it can be processed in a heterogeneous system landscape.

In accordance with an aspect, said predetermined block of idle frames is inserted to the payload area of the optical data unit at an egress line card of the first and/ or second communication node of the optical transport network.

This has the advantage that no payload area comprising empty frames only has to be transmitted internally in the first and/ or second communication node over the backplane of the communication node, thus reducing the required bandwidth within the communication node. Furthermore, it is possible to switch off or at least reduce resources that are normally required to process the payload data, even if the payload data consist of empty frames, only.

In accordance with an aspect, if the Ethernet data are not transmitted as packets but as a Constant Bit Rate signal (CBR), the Generic Mapping Procedure (GMP) may be used to encapsulate ingress data wherein no idle frames are inserted into the payload area but only an empty payload field.

The optical transport network may comprise a third communication node that is configured to provide an interface between the optical transport network and a receiving client. This interface may be packet-based, Thus, the role of the third communication node is to forward the received optical data units to a client outside of the optical transport network by demapping ODU containers and generating e.g. packets from GFP frames that are forwarded to the packet-based client interface.

In accordance with an aspect, the method may comprise the steps of determining whether or not the overhead area of an ingress optical data unit at said third communication node comprises the indicator that indicates that the payload area of said optical data unit does not contain any valid payload data. If it has been determined based on the inserted indicator that the ingress optical data unit received at said third communication node does not contain any payload data, no demapping of the frames that include no valid payload data of the optical data unit received at said third communication node is carried out and no egress packet data is generated. Alternatively, egress packet data is generated by adding a predetermined payload container.

Further, the method may include the step of reducing or switching off of available data processing resources at said third communication node if no valid payload data is received. By way of example, as long it is determined by evaluating the indicator in the overhead area that ingress optical data units at said third communication node do not contain any valid payload data, the ODU mapper that is configured to demap received ODU containers may be switched off instead of using the ODU mapper to demap idle frames.

In accordance with a further aspect, said reducing or switching off of available data processing resources at said first and/or second and/or third communication node includes switching off at least one of accessing external packet RAM, generating idle frame in an ingress optical data unit mapper, conducting performance or fault monitoring, transporting the optical data unit container through the communication node and over a backplane of the communication node to a switch and back, allocating switch memory and processing the payload data in an egress optical data unit mapper.

In accordance with a further aspect, a first indicator, e.g. a client idle flag, and a second indicator, e.g. a client sleep flag, may be used to indicate that the payload area of said optical data unit does not contain any valid payload data. In accordance with this aspect, the first and second indicator may be two different values of a predetermined field in the ODU overhead or may be two separate flags that are set in the ODU overhead. The second indicator is inserted into the overhead area instead of the first indicator after it has been determined that no packet data has been received at said first communication device for a predetermined time. The second and/or third communication node switch from a normal data processing mode to a first power safe mode to reduce or to switch off data processing resources if said inserted indicator is the first indicator and the second and/or third communication node switch from a first power save mode to a second power safe mode to further reduce or to switch off additional data processing resources if said inserted indicator is the second indicator. In other words, a two-phase approach is used to power down or to reduce processing resources at said communication node.

Time and energy is required for switching off or reducing processing resources and for switching them on again. In order to prevent the occurrence of frequent or too early transitions to a power safe mode or adaptations of the processing resources, the proposed two-phase approach has the advantage that a first idle phase is used to confirm whether the state of not receiving payload data is continuing for a predetermined time before transitioning to a deeper sleep mode. During the first phase, buffers may be cleared but the majority of processing resources may still be available. Only after the predetermined time period, the communication nodes may transition to a sleep state wherein upon determining that the inserted indicator is the second indicator, parallel processing re-sources in the first, second and/or third communication node are reduced or switched-off.

Likewise, the inverse order of indicators may be used for a two-phase wake-up approach to reactivate processing resources at the communication nodes.

In accordance with an aspect, the method may comprise the step of indicating to an egress client interface of said third communication node that the communication node is currently in a power safe mode. This aspect offers the advantage that the information on the current traffic situation can not only be used within the optical transport network for resource adaptation but can also be forwarded to the receiving client so that the client can also adapt its processing resources, accordingly.

In accordance with an aspect, if it has been determined that the ingress packet data at said first communication node or the ingress optical data unit at said second or third communication node does not comprise any valid payload data, the communication node may be configured not to transmit a payload area with empty frames from an ingress line card to an egress line card of the communication node, which reduces the use of processing resources within the communication node.

According to an aspect, a communication node of an optical transport network is configured to act as a first communication node, second communication node or third communication node of a method according to above aspects. The communication node may comprise a line card.

In accordance with this aspect, a first communication node of an optical transport network comprises an interface to receive ingress data from a client; an optical data unit mapping means configured to generate optical data units comprising an overhead area and a payload area, wherein ingress data is encapsulated into frames and said frames are mapped into the optical data units; and an interface to transmit optical data units to a downstream communication node of the optical transport network. The client interface may be a packet-based interface. The first communication node is configured to determine whether or not ingress data is currently being received; and if it has been determined that no ingress data is currently being received, the communication node is configured to reduce or switch off available data processing resources at said first communication node and to insert an indicator in the overhead area of an optical data unit. The inserted indicator indicates that the payload area of said optical data unit does not contain any valid payload data.

In accordance with an aspect, a second communication node of an optical transport network is proposed that comprises an interface to receive ingress optical data units from an upstream communication node and an interface to transmit egress optical data units to a downstream communication node of the optical transport network. The second communication node is configured to determine if the overhead area of an ingress optical data unit received at said second communication node comprises an inserted indicator that indicates that the payload area of said optical data unit does not contain any valid payload data. If it has been determined based on the inserted indicator that the ingress optical data unit received at said second communication node does not contain any valid payload data, the second communication node is configured to reduce or switch off available data processing resources at said second communication node.

In accordance with an aspect, a third communication node of an optical transport network is proposed, that comprises an interface to receive optical data units from the optical transport network and an interface to a receiving client; and an optical data unit mapping means. The client interface may be a packet-based interface. The third communication node is configured to determine whether or not the overhead area of an ingress optical data unit received at said third communication node comprises an inserted indicator that indicates that the payload area of said optical data unit does not contain any valid payload data. If it has been determined based on the inserted indicator that the ingress optical data unit received at said third communication node does not contain any payload data, the optical data unit mapping means is configured to skip demapping or refrain from demapping the frames of the optical data unit received at said third communication node and to refrain from generating egress packet data. Further, if it has been determined based on the inserted indicator that the ingress optical data unit received at said third communication node does not contain any payload data, the third communication node is configured to reduce or switch off available data processing resources at said third communication node.

According to a further aspect, a communication system is proposed that comprises communication nodes configured to act as a first communication node, second communication node or third communication node of a method according to any one of the above aspects.

The above describe aspects of the method claims may be further combined in connection with the first, second and third communication node. In other words, the method features may be used to specify the communication node(s).

### Brief Description of Figures

The invention is explained below in an exemplary manner with reference to the accompanying drawings, wherein
Fig. 1 shows a plurality of communication nodes of an optical transport network according to an embodiment;
Fig. 2 shows the frame structure of an optical transport unit;
Figs. 3A to 3C show flow diagrams of steps involved in a method according to an embodiment;
Figs. 4A and 4B illustrate the payload area of an optical data unit;
Fig. 5A shows a communication node of an optical transport network according to an embodiment that is configured to act as a first communication node, second communication node or third communication node; and
Fig. 5B shows a first communication node according to an embodiment; and
Fig. 6 illustrates the two-phase approach when adjusting processing resources of a communication node according to an aspect.

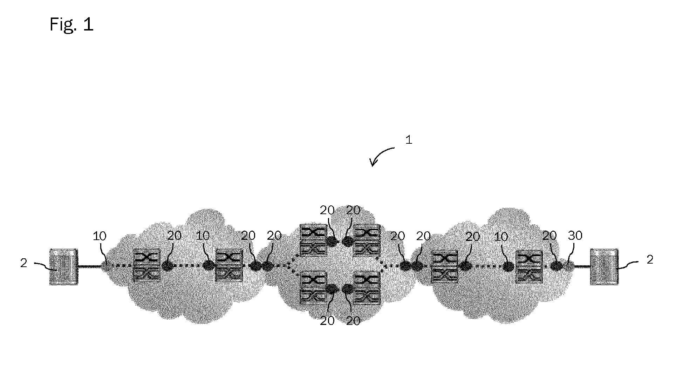

Fig. 1 illustrates an optical transport network 1 with a plurality of communication nodes 10, 20, 30. The communication nodes 10 and 30 provide a network client interface to receive ingress traffic from and to forward egress traffic to Ethernet routers 2 and 3. Thus, the nodes 10 and 30 provide a packet-based interface to Ethernet clients. By way of example, the nodes 10 and 30 may be edge elements with an user-network interface (UNI). The communication nodes 20, also referred to as network core elements, provide an inter-domain or intra-domain interface between two communication nodes of the optical transport network 1. For example, the communication nodes 20 may be a dense wave division multiplexing photonic switch. Thus, these nodes 20 multiplex and demultiplex optical data unit signals into or from different optical data unit types. For illustrative purposes, an example is described where ingress traffic at the node 10 is transmitted to an egress node 30 via one or more nodes 20. Since traffic may flow bidirectionally between the nodes 10 and 30 via one or more of the nodes 20, it will be appreciated that the description of the claimed subject-matter equally applies to the reverse direction when ingress traffic is received at the communication node 30 and is transmitted to the communication node 10 via one more communication nodes 20.

The communication nodes 10, 30 use optical data units (ODU) as a container within an optical transport unit to transport client packet flows.

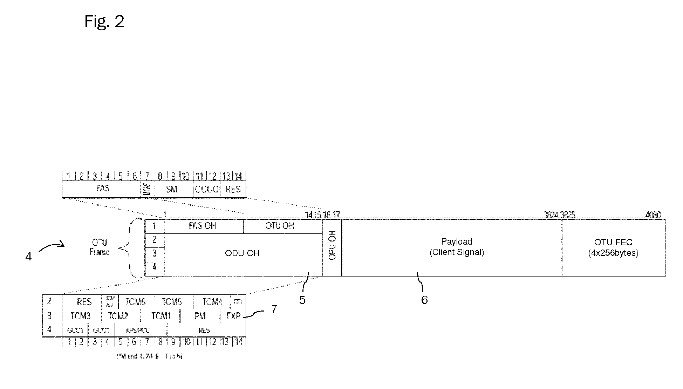

Fig. 2 illustrates the frame structure of an optical transport unit 4 comprising an overhead area 5 and a payload area 6 of an optical data unit. Each portion of the OTU frame has its own specific overhead functions. They are displayed in Figure 2 and are briefly described below. Further details about these overhead fields are specified in the ITU G.709 standard.

The structure of an OTU frame 4 is 3824 columns by four rows (excl. OTU FEC section). The first 14 columns contain the ODU overhead (ODU OH) 5 and the next two columns contain the OPU overhead (OPU OH). The remaining 3808 columns is the payload area 6 of the optical data unit which contains the client data.

The OTU framing FAS OH is divided into two portions: FAS and MFAS. The frame alignment signal (FAS) uses the first six bytes and, similarly to SONET/SDH, it is used to provide framing for the entire signal. In order to provide enough 1/0 transitions for synchronization, scrambling is used over the entire OTU frame, except for the FAS bytes. The multiframe alignment signal (MFAS) byte is used to extend command and management functions over several frames. The MFAS counts from 0 to 255, providing a 256 multiframe structure.

The OTU overhead is comprised of the SM, GCCO and RES bytes. The section monitoring (SM) bytes are used for the trail trace identifier (TTI), parity (BIP-8) and the backward error indicator (BEI), or backward incoming alignment error (BIAE), backward defect indicator (BDI), and incoming alignment error (IAE). The TTI is distributed over the multiframe and is 64 bytes in length. It is repeated four times over the multiframe. General communication channel 0 (GCCO) is a clear channel used for transmission of information between OTU termination points. The reserved (RES) bytes are currently undefined in the standard.

The ODU overhead 5 is broken into several fields: RES, PM, TCMi, TCM ACT, FTFL, EXP, GCC1/GCC2 and APS/PCC. The reserved (RES) bytes are undefined and are set aside for future applications. The path monitoring (PM) field is similar to the SM field described above. It contains the TTI, BIP-8, BEI, BDI and Status (STAT) sub-fields. There are six tandem connection monitoring (TCMi) fields that define the ODU TCM sub-layer, each containing TTI, BIP-8, BEI/BIAE, BDI and STAT sub-fields associated to each TCM level (i=1 to 6). The STAT sub-field is used in the PM and TCMi fields to provide an indication of the presence or absence of maintenance signals. The tandem connection monitoring activation/deactivation (TCM ACT) field is currently undefined in the standards. The fault type and fault location reporting communication channel (FTFL) field is used to create a message spread over a 256-byte multiframe. It provides the ability to send forward and backward path-level fault indications.

The experimental (EXP) field 7 is a field that is not subject to standards and is available for network operator applications. It is used according to an embodiment to set the flag indicating whether or not the payload area 6 contains any valid data (see description further below).

General communication channels 1 and 2 (GCC1/GCC2) fields are very similar to the GCCO field except that each channel is available in the ODU. The automatic protection switching and protection communication channel (APS/PCC) supports up to eight levels of nested APS/PCC signals, which are associated to a dedicated-connection monitoring level depending on the value of the multiframe.

Regarding the OPU overhead (OPU OH), the primary overhead field associated with the OPU is the payload structure identifier. This is a 256-byte multiframe whose first byte is defined as the payload type. The remaining 255 bytes are currently reserved. The other fields in the OPU overhead are dependent on the mapping capabilities associated to the OPU. For an asynchronous mapping (the client signal and OPU clock are different) justification control (JC) bytes are available to compensate for clock rate differences. For a purely synchronous mapping (client source and OPU clock are the same), the JC bytes become reserved. Further details on mapping are available in ITU G.709.

The ITU G.709 standard supports forward error correction (FEC) in the OTU frame and is the last part added to the frame before the frame is scrambled. FEC provides a method to significantly reduce the number of transmitted errors due to noise, as well as other optical phenomena that occur at high transmission speeds. This enables providers to support longer spans in between optical repeaters. An OTU frame is divided into four rows. Each row is broken down into 16 sub-rows comprised of 255 bytes each, as shown in Figure 2. A sub-row is composed of interleaved bytes. The interleave is executed so that the first sub-row contains the first overhead (OH) byte, the first payload byte and the first FEC byte, and so on for the remaining sub-rows of each row in the frame. The first FEC byte starts at position 240 for all sub-rows. The FEC uses a Reed-Solomon RS (255/239) coding technique. This means that 239 bytes are required to compute a 16-byte parity check. The FEC can correct up to eight (bytes) errors per sub-row (codeword) or detect up to 16 byte errors without correcting any. Combined with the byte interleave capability included in ITU G.709 implementation, the FEC is more resilient to error burst, where up to 128 consecutive bytes can be corrected per OTU frame row.

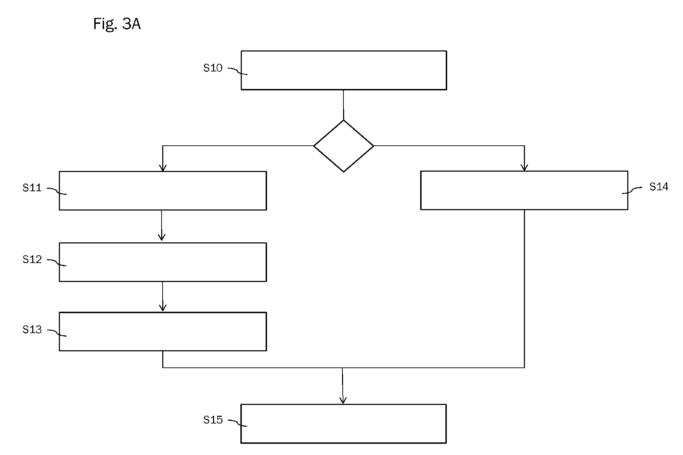

Fig. 3A shows a flow diagram of steps involved in a method according to an embodiment. In particular, Fig. 3A illustrates the steps carried out at a communication node 10 of the optical transport network 1 that receives ingress packet data from a client router 2. The following description illustrates an example wherein the client router 2 transmits traffic to the target router 3. In this case, the communication node 10 receives ingress packet data transmitted from the Ethernet router 2. It will be appreciated that this role could also be assumed by the communication node 30, when receiving ingress traffic from the router 3.

At the communication node 10, ingress Ethernet packet data is mapped into the payload area 6 using the Generic Framing Procedure (GFP), as specified in ITU-T G.7041.

In step S10, the communication node 10 is configured to determine whether or not ingress packet data is currently being received from the client 2 using a metering unit for measuring ingress traffic. If it has been determined that no ingress packet data is currently being received at said first communication node 10, the method proceeds to step S11.

In step S11, an indicator flag is inserted in the overhead area 5 of the optical data unit, wherein the inserted indicator indicates that the payload area 6 of the optical data unit does not contain any valid payload data. A position in reserved or experimental bytes 7(see Fig. 2 showing the RES and EXP fields of the ODU overhead) can be used for that purpose until this method has been fully standardized.

In communication nodes known in the art, GFP idle frames are generated on a frame-by-frame basis in an ingress ODU mapper unit. The GFP idle frames are transported as part of the ODU container through the device and over the backpanel or backplane to the switch and back. By contrast, with the indicator flag set according to the embodiment, there is no need any more to access external packet RAM, to generate GFP Idle Frames in the ingress ODU mapper, to do performance / fault monitoring, to transport the whole ODU container through the device and over the backpanel, to allocate switch memory, to process the frame in the egress ODU mapper. In step S12, the processing resources are therefore reduced or switched off as long it is determined that no ingress payload data is currently being received at said network ingress communication node 10.

Instead of the "normal" GFP frame processing, in step S13, a predetermined block of idle frames is inserted to the payload area 6 of optical data units that comprise the inserted indicator in the overhead area 5. The predetermined block of idle frames is programmed into an application-specific integrated circuit or a field-programmable gate array of the communication node 10. It will be appreciated that the steps S11 to S13 do not have to be carried out in the described sequence but the sequence of steps can also be interchanged.

If it has been determined in step S10 that ingress packet data is currently being received at said first communication node 10, the method proceeds to step S14. In step S14, Ethernet ingress packet data is mapped into the payload area using the Generic Framing Procedure (GFP), specified in ITU-T G.7041.

In step S15, the generated ODU will be forwarded to a downstream communication node 20. Depending whether or not it has been determined in step S10 that ingress packet data is currently being received at said first communication node 10, either an ODU with an indicator flag in the ODU overhead area 5 and a payload area consisting of a block of idle frames is forwarded or a "regular" ODU comprising valid payload data in the ODU payload area 6 is forwarded in steps S15.

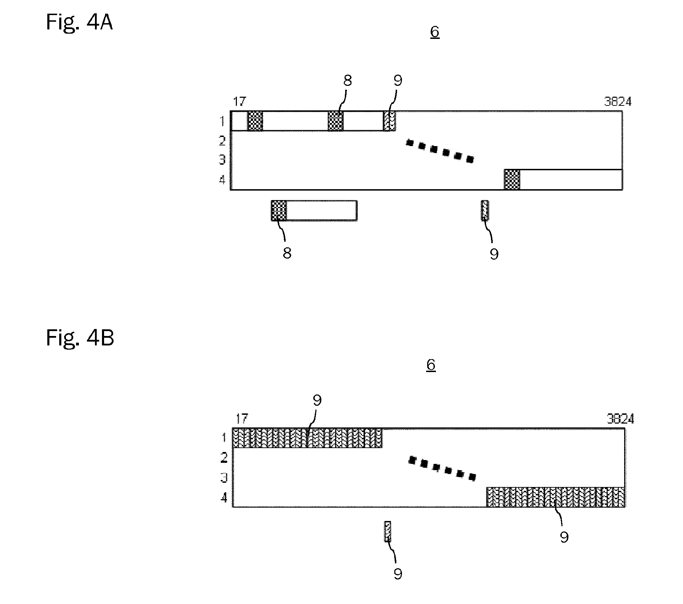

Fig. 4A illustrates the payload area of an optical data unit generated in step S14. The payload area comprises a mix of GFP data frames 8 and GFP idle frames 9. This illustrates a packet network that is currently not fully utilized, wherein a period of data transmission resulting in the GFP data frames 8 is followed by a period with no packet data being sent to the communication node 10, resulting in the idle GFP frames 9 being inserted into the payload area 6. The payload area 6 may also comprise GFP data frames 8, only (not shown).

Fig. 4B illustrates the payload area of an optical data unit that comprises a block of idle frames 90, only. Instead of adding these 3824 idle frames containing no valid payload data frame-by-frame by the ingress ODU mapper, an entire predetermined block of 3824 idle frames is inserted according to an embodiment as a whole, wherein the predetermined block of idle frames has been programmed into an application-specific integrated circuit or a field-programmable gate array of the communication node 10 in order to save resources and processing time.

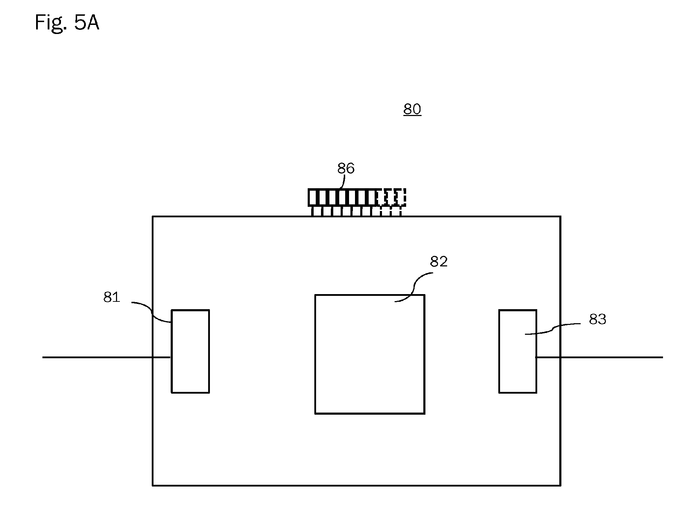

Fig. 5A shows a communication node 80 of an optical transport network according to an embodiment that is configured to act as a first communication node, second communication node or third communication node. The communication node 80 comprises an ingress interface 81, an egress interface 83, an optical data unit mapper 82 and processing resources 86 that can be adapted to the current traffic load. By way of example, if the communication node 80 is a network edge element (10, 30), i.e. the node is located at network egress of the optical transport network and receives traffic from and transmits traffic to an Ethernet client, the interface 81 that represents the interface with the Ethernet may comprise a user-network interface (UNI) and the second interface 83 represents an interface between two optical communication nodes. If the communication node 80 is an intra-domain or inter-domain communication node 20 of the optical transport network, the communication node 80 is referred to as a network core element and in this case, both of the interfaces 81, 83 represent interfaces between two optical communication nodes.

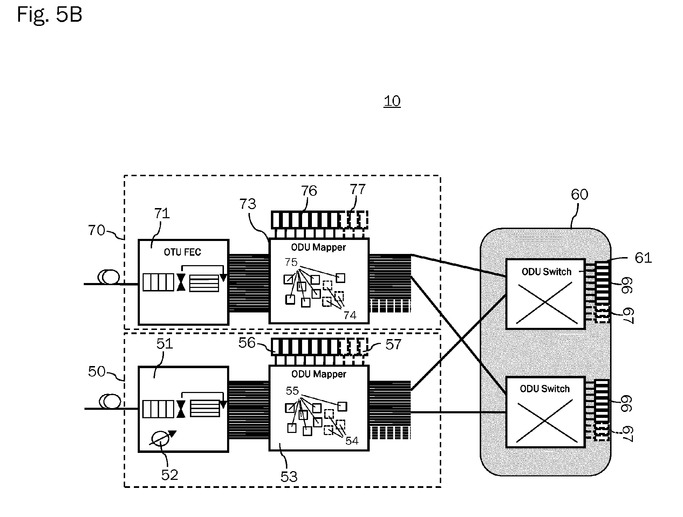

Fig. 5B shows a schematic block diagram of a communication node 10 of the optical transport network 1 that is configured to act as a first communication node 10 to carry out the method described in Fig. 3A. The communication node 10 comprises a line card 50 that provides a packet-based interface to an Ethernet client. Packet-based traffic is received from an Ethernet client and transmitted to an Ethernet client through the line card 50. The line card 50 comprises an optional packet processor 51. The packet processor 51 comprises a metering unit 52 that determines the ingress traffic rate.

The communication nodes further comprises an ingress ODU mapper 53 responsible for encapsulating packets into GFP frames and mapping these frames into ODU containers. The generated ODU containers are switched by a switch 61 of the backplane 60 and transmitted to the egress line card 70. The egress line card 70 comprises an egress ODU mapper 73 that multiplexes and demultiplexes ODU signals into and from different ODU types (e.g. 4xODU2 to and from ODU3). The OTU FEC unit 71 of the egress line card 70 adds a forward error correction before forwarding the ODU to a downstream communication node.

There are multiple possible ways how information on the current packet rate (in particular zero packet rate) can be provided to the OTN. Two examples are provided in the following:
IP/MPLS router or Ethernet switch signaling:
   If a packet interface enters a power save mode that includes laser shutdown this will be signaled to the OTN client interface so that no Client Signal Fail (CSF) alarm is inserted. Subsequently, this information may be used by other OTN network element functions (e.g. the ODU mapper, see Fig. 5B).
Detection on OTN client interface:
   Packet-based OTN client interfaces (e.g. Gigabit Ethernet, 10 Gigabit Ethernet) employ different levels of packet processing functionality, ranging from MAC/packet counters to elaborated packet switching and traffic management. Idle conditions that last for a certain period of time (one ODU2 frame period is ∼12µs) can be detected easily by packet counters/meters and passed to the next functional block (e.g. the ODU mapper).

The network ingress ODU mapper is responsible for encapsulating packets in GFP frames and mapping these frames into ODU containers. On network egress, the ODU mapper will demap ODU containers and generate packets from the GFP frames. In intermediate nodes, ODU mappers are used to multiplex and demultiplex ODU signals into/from different ODU types (e.g. 4xODU2 <> ODU3).

When the network ingress ODU mapper receives the information that no packets have been received, it sets a special CLIENT_IDLE flag in the ODU overhead (respectively, a CLIENT_SLEEP flag if the router has signaled a client interface sleep). A position in reserved or experimental bytes may be used for that purpose. With the CLIENT_IDLE / CLIENT_SLEEP flag set, there is no need to:
- access external packet RAM;
- generate GFP Idle Frames in the ingress ODU mapper;
- do performance/fault monitoring;
- transport the whole ODU container through the device and over the backpanel to the switch and back;
- allocate switch memory;
- process the frame in the egress ODU mapper;
- etc.
Instead, the predefined "idle" ODU container will be inserted into the OTU frame by the egress ODU mapper.

It is up to the individual architecture of the OTN network element to make use of these options and to set the respective functional blocks and components to power-save/sleep. This could be done by applying methods like reducing the clock rate or even disabling the clock, dynamic voltage scaling, transmitting zeros instead of toggling data, etc. Circuits may be put into deeper sleep if CLIENT_SLEEP is received. Preferably, a CLIENT_SLEEP transition will be announced before by a CLIENT_IDLE in order to have sufficient time for a wake-up (see below).

When the special CLIENT_IDLE / CLIENT_SLEEP flag is detected on the network egress ODU mapper, no GFP demapping is required as no packets have to be sent. It is again up to individual OTN network element to further exploit this state and set also the egress packet interface to sleep mode.

Referring again to Fig. 5B, the metering unit 52 informs the ingress ODU mapper 53 whether or not data packets are currently being received at the ingress line card 50. If the ingress ODU mapper 53 receives the information that no data packets have been received, it sets a special indicator flag in the ODU overhead area.

With the indicator flag set so that it indicates that no payload data have been received, there is no need to access external packet RAM, to generate GFP Idle Frames in the ingress ODU mapper, to conduct performance / fault monitoring, to transport the whole ODU container through the node 10 and over the backpanel 70 to the switch 71 and back, to allocate switch memory, to process the frame in the egress ODU mapper 73, etc.

The communication node 10 then transitions into a power safe mode by reducing or switching off processing resources. This is illustrated in Fig. 5B, where only part of the ODU mapper processing resources 55 and 75 are still active, while others 54 and 74 (illustrated using dotted lines) have been switched off. Likewise, only some of the memory resources 56, 66 and 76 of the ODU mappers or of the ODU switches are still active, while others 57, 67 and 77 have been switched off (illustrated using dotted lines). It is up to the individual architecture of the OTN network element to make use of these options and to set the respective functional blocks and components to power-save / sleep. This could be done by well-known and established methods like reducing the clock rate or even disabling it, dynamic voltage scaling, transmitting zeros instead of toggling data, etc.

If the communication node 10 determines that no packet data is currently being received at the ingress line card 50, the egress ODU mapper 73 is adding a predefined "idle" ODU container into the OTU frame. This provides the advantage that no payload area comprising empty frames only has to be transmitted over the backplane 60 of the communication node 10, reducing the required bandwidth and energy consumption within the communication node 10. Further, adding a programmed block of empty frames in one step at the egress ODU mapper 73 is resource-efficient and ensures that the egress optical data unit conforms to the standard and can be processed in a heterogeneous system landscape.

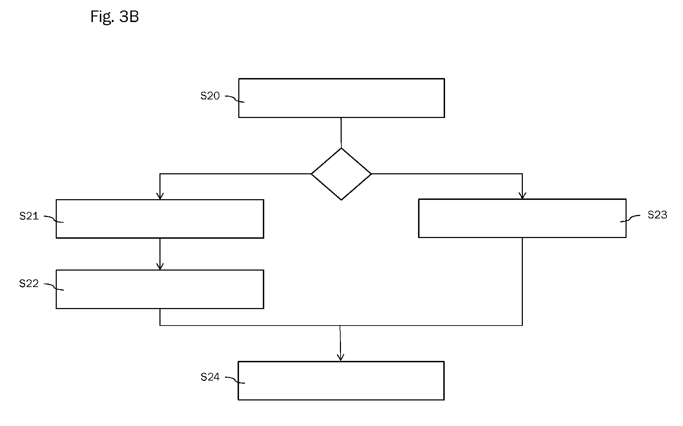

Fig. 3B illustrates the steps carried out at downstream communication node 20 of the optical transport network 1. The communication node 20 is configured to receive ingress optical data units from one or more upstream communication nodes, e.g. the communication node 10. The communication node 20 transmits egress optical data units to one or more downstream communication nodes of the optical transport network 1.

In step S20, the communication node 20 determines if the overhead area 5 of an ingress optical data unit received at said second communication node 20 comprises the indicator that indicates that the payload area 6 of the optical data unit does not contain any valid payload data.

If it has been determined based on the inserted indicator that a received optical data unit does not contain any valid payload data, the method proceeds to step S21. In step S21, the communication node adds a predetermined block of idle frames to the payload area 6 of the generated optical data unit at its egress line card. As with the first communication node, the predetermined block of idle frames is preferably programmed into an application-specific integrated circuit or a field-programmable gate array of the communication node 20.

Thus, instead of demultiplexing and multiplexing optical data unit signals into or from different optical data unit types at said second communication node by processing the frames of the payload area of the received optical data units, the communication node 20 simply adds a pre-programmed block of idle frames at its egress line card. Thus, only the overhead area of the received optical data unit is transmitted over the backplane, no payload area is forwarded.

According to an embodiment, it is also possible to transmit the block of idle frames contained in the received optical data unit from node ingress through the backplane to node egress.

In step S22, the communication node 20 reduces or switches off its processing resources for processing payload data of the optical data unit. The processing resources are reduced or switched off as long as the ingress optical data units contain an indicator in their overhead area indicating that no or no valid payload data is included in the payload area of the optical data unit.

If it has been determined based on the inserted indicator that a received optical data unit does contain valid payload data, e.g. if no payload indicator is included in the overhead area of the received optical data unit or if the indicator flag being set to a value that indicates that the ODU contains payload data, the method proceeds from step S20 to step S23.

In step S23, the communication node 20 demultiplexes and multiplexes optical data unit signals into or from different optical data unit types using the ingress ODU mapper and the egress ODU mapper. The optical data units generated in step S22 and step S23 are transmitted to a downstream communication node in step S24.

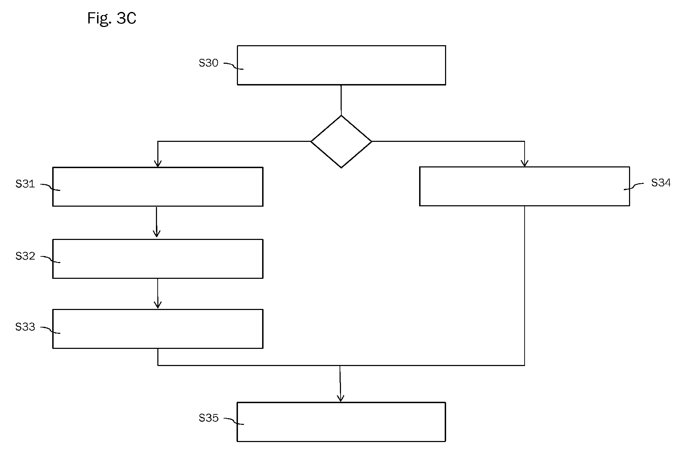

Fig. 3C illustrates the steps carried out at downstream communication node 30 of the optical transport network. The communication node 30 is an egress network node of the optical transport network, i.e. the node 30 is configured to provide a packet-based interface between the optical transport network 1 and a (receiving) client 3. At step S30, the communication node 30 determines whether or not the overhead area 5 of an incoming optical data unit comprises the inserted indicator that indicates that the payload area of the incoming optical data unit does not contain any valid payload data. If it has been determined based on the indicator that the ingress optical data unit does not contain any payload data, the method proceeds to step S31. At step S31, the communication node 31 generates an egress packet data by adding a predetermined payload container instead of demapping the frames of the optical data unit received at the third communication node 30. The communication node 30 does not need to analyze the payload data frame-by-frame but instead is configured to skip the "normal" frame processing and to insert a predetermined and preprogrammed payload container into the outgoing packet data.

In step S33, the communication node 30 can reduce or switch off resources for GFP demapping. Preferably, the communication node can also signal to the Ethernet client that no payload data are currently transmitted, e.g. by adding a respective flag in the overhead of the transmitted packets.

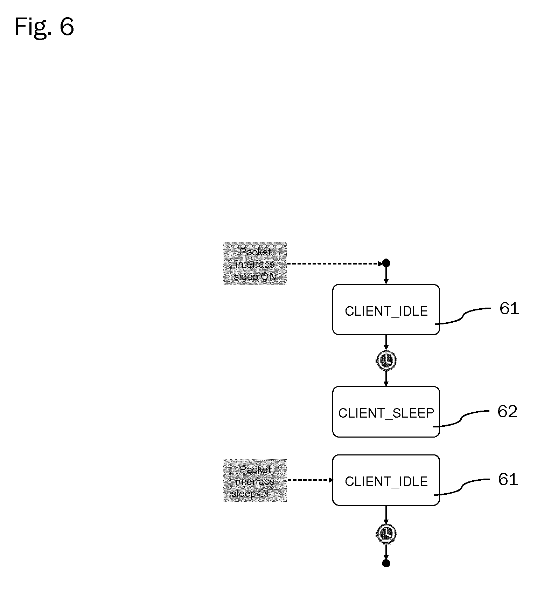

Fig. 6 illustrates a two-phase approach for adjusting processing resources of the communication nodes 10, 20 and 30 according to an embodiment. The indicator inserted into the ODU overhead 5 comprises two different flags or one indicator having at least two different values. For example, a first indicator could be set to a value "CLIENT_IDLE" 61 or to a value "CLIENT_SLEEP" 62.

If the first communication node 10 determines that payload data are no longer transmitted from the client 2, i.e., the client 2 is in the sleep mode, the indicator is first set to "CLIENT_IDLE" 61. Only if this status of not receiving any ingress client data is continued for a predetermined time period, then the indicator is set to "CLIENT_SLEEP" 62. Likewise, if the communication node 10 determines that client 2 has resumed transmitting data, then the indicator that is inserted into the overhead area 5 of the ODU is changed from "CLIENT_SLEEP" 62 to "CLIENT_IDLE" 61. In other words, a transition from a power safe mode is announced with a transition from a "CLIENT_SLEEP" 62 to a "CLIENT_IDLE" 61 indicator flag in order to have sufficient time for a wake-up.

Circuits can be put into deeper sleep mode if "CLIENT_SLEEP" is received. By way of example, buffers may be cleared during the "CLIENT_IDLE" phase but the majority of processing resources would still be available. Only after the indicator flag has been set to "CLIENT_SLEEP" 62, the communication nodes transition to a deeper sleep state.

When the special CLIENT_IDLE / CLIENT_SLEEP flag is detected on the network egress ODU mapper, no GFP demapping is required as no packets have to be sent. It is again up to individual OTN network element to further exploit this state and e.g. set also the egress packet interface to sleep mode.

While a plurality of embodiments are described below, it is clear to a person skilled in the art that individual features from more than one embodiment may be combined and that the disclosure of the present document extends to every possible combination of features described in conjunction with the embodiments. In particular, features disclosed in combination with an example method may also be combined with embodiments relating to an example system and vice versa.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method of reducing power consumption of an optical transport network (1) having a first communication node (10) of the optical transport network (1) configured to provide an interface between a client (2) and the optical transport network (1), wherein optical data units comprising an overhead area (5) and a payload area (6) are generated and wherein ingress packet data is encapsulated into frames and said frames are mapped into the optical data units; the method comprising the steps of:
determining, at said first communication node (10), whether or not ingress packet data is currently being received;
if it has been determined that no ingress packet data is currently being received at said first communication node (10), reducing or switching off of available data processing resources at said first communication node (10) and inserting an indicator in the overhead area (5) of an optical data unit, wherein the inserted indicator indicates that the payload area (6) of said optical data unit does not contain any valid payload data.

2. Method according to claim 1, the optical transport network (1) comprising a second communication node (20) being configured to receive ingress optical data units from an upstream communication node and to transmit egress optical data units to a downstream communication node of the optical transport network, the method further comprising the steps of:
determining if the overhead area (5) of an ingress optical data unit at said second communication node (20) comprises the inserted indicator that indicates that the payload area (6) of said optical data unit does not contain any valid payload data,
wherein if it has been determined based on the inserted indicator that the ingress optical data unit received at said second communication node (20) does not contain any valid payload data, reducing or switching off of available data processing resources at said second communication node (20).

3. Method according to claims 1 or 2, further comprising at the first (10) and/ or the second (20) communication node the step of: inserting a predetermined block of idle frames (90) into the payload area (6) of an optical data unit that comprises the inserted indicator in the overhead area (5).

4. Method according to claim 3, wherein the predetermined block of idle frames (90) is programmed into an application-specific integrated circuit or a field-programmable gate array of the first (10) and/ or the second (20) communication node.

5. Method according to claims 3 or 4, wherein said predetermined block of idle frames (90) is inserted into the payload area (6) of the optical data unit at an egress line card (70) of the first (10) and/ or second (20) communication node of the optical transport network (1).

6. Method according to any one of the preceding claims, wherein whether or not ingress packet data from the client interface is currently being received at said first communication node (10) is determined based on a received signal from a client router or switch (2) indicating a transition to a power save mode or a laser shutdown of the client router (2) or switch.

7. Method according to any one of the preceding claims 1 to 6, wherein whether or not ingress packet data from the client interface is currently being received at said first communication node (10) is determined based on a packet counter or metering unit (52) at said first communication unit (10).

8. Method according to any one of the preceding claims, the optical transport network (1) comprising a third communication node (30) configured to provide an interface between the optical transport network (1) and a receiving client (2), the method comprising the steps of:
determining whether or not the overhead area (5) of an ingress optical data unit at said third communication node (30) comprises the inserted indicator that indicates that the payload area (6) of said optical data unit does not contain any valid payload data;
wherein if it has been determined based on the inserted indicator that the ingress optical data unit received at said third communication node (30) does not contain any payload data, no demapping of the frames of the optical data unit received at said third communication node (30) is conducted and no egress packet data is generated;
wherein if it has been determined based on the inserted indicator that the received ingress optical data unit does not contain any payload data, reducing or switching off of available data processing resources at said third communication node (30).

9. Method according to any one of the preceding claims, wherein said reducing or switching off of available data processing resources at said first (10) and/or second (20) and/or third (30) communication node includes switching off at least one of accessing external packet RAM (67, 77), generating idle frame in an ingress optical data unit mapper (63), conducting performance or fault monitoring, transporting the optical data unit container through the communication node and over a backplane (60) of the communication node to a switch and back, allocating switch memory and processing the payload data in an egress optical data unit mapper (73).

10. Method according to any one of the preceding claims,
wherein a first indicator (61) and a second indicator (62) are used to indicate that the payload area (6) of said optical data unit does not contain any valid payload data, wherein said second indicator is inserted into the overhead area (5) instead of the first indicator (61) after it has been determined that no ingress data has been received at said first communication node (10) for a predetermined time;
wherein the second (20) and/or third (30) communication node switch from a normal data processing mode to a first power safe mode to reduce or to switch off data processing resources if said inserted indicator is the first indicator (61), and the second (20) and/or third (30) communication node switch from a first power save mode to a second power safe mode to further reduce or to switch off additional data processing resources if said inserted indicator is the second indicator (62).

11. Method according to claim 10, wherein upon determining that the inserted indicator is the second indicator (62), switching off parallel processing resources in said first (10), second (20) and/or third (30) communication node.

12. Method according to any one of the preceding claims, wherein if it has been determined that ingress data at said first communication node (10) or ingress optical data unit at said second (20) or third (30) communication node does not comprise any valid payload data, the communication node does not transmit a payload area with empty frames from an ingress line card (50) to an egress line card (70) of the communication node.

13. A communication node (10) for an optical transport network (1), comprising:
a first packet interface to receive ingress data from a client;
an optical data unit mapping means configured to generate optical data units comprising an overhead area (5) and a payload area (6), wherein ingress data is encapsulated into frames and said frames are mapped into the optical data units; and
a second interface to transmit optical data units to a downstream communication node of the optical transport network (1);
wherein the communication node (10) is configured to determine whether or not ingress data is currently being received; and if it has been determined that no ingress data is currently being received, the communication node (10) is configured to reduce or switch off at least one available data processing resource at the communication node (10) and to insert an indicator in the overhead area (5) of an optical data unit, wherein the inserted indicator indicates that the payload area (6) of said optical data unit does not contain any valid payload data.

14. A communication node (20) for an optical transport network (1), comprising a first interface to receive ingress optical data units from an upstream communication node and a second interface totransmit egress optical data units to a downstream communication node of the optical transport network (1); said communication node (20) being configured to determine if the overhead area (5) of an ingress optical data unit received at said communication node (20) comprises an indicator that indicates that the payload area (6) of said optical data unit does not contain any valid payload data; wherein if it has been determined based on the indicator that the ingress optical data unit received at said communication node (20) does not contain any valid payload data, said communication node (20) is configured to reduce or switch off at least one available data processing resource at said communication node (20).

15. A communication node (30) for an optical transport network (1), comprising a first interface to receive optical data units from the optical transport network (1) and a second interface to a receiving client (2), and an optical data unit mapping means; said communication node (30) being configured to determine whether or not the overhead area (5) of an ingress optical data unit received at said communication node (30) comprises an indicator that indicates that the payload area (6) of said optical data unit does not contain any valid payload data; wherein if it has been determined based on the indicator that the ingress optical data unit received at said communication node (30) does not contain any payload data, the optical data unit mapping means is configured not to demap the frames of the received optical data unit and not to generate egress data; wherein if it has been determined based on the indicator that the ingress optical data unit received at said communication node (30) does not contain any payload data, said communication node (30) is configured to reduce or switch off at least one available data processing resource at said communication node (30).

## Patentansprüche

1. Verfahren zur Reduzierung des Leistungsverbrauchs eines optischen Transportnetzwerks (1), wobei ein erster Kommunikationsknoten (10) des optischen Transportnetzwerks (1) für die Bereitstellung einer Schnittstelle zwischen einem Client (2) und dem optischen Transportnetzwerk (1) konfiguriert ist, wobei optische Dateneinheiten, welche einen Overhead-Bereich (5) und einen Nutzdatenbereich (6) umfassen, erzeugt werden, und wobei Eingangspaketdaten in Rahmen eingekapselt und die besagten Rahmen auf die optischen Dateneinheiten abgebildet werden; wobei das Verfahren die folgenden Schritte umfasst:
Ermitteln, an dem besagten ersten Kommunikationsknoten (10), ob momentan Eingangspaketdaten empfangen werden oder nicht;
wenn ermittelt wurde, dass momentan keine Eingangspaketdaten an dem besagten ersten Kommunikationsknoten (10) empfangen werden, Reduzieren oder Ausschalten von verfügbaren Datenverarbeitungsressourcen an dem besagten ersten Kommunikationsknoten (10), und Einfügen eines Indikators in den Overhead-Bereich (5) einer optischen Dateneinheit, wobei der eingefügte Indikator anzeigt, dass der Nutzdatenbereich (6) der besagten optischen Dateneinheit keine gültigen Nutzdaten enthält.

2. Verfahren nach Anspruch 1, wobei das optische Transportnetzwerk (1) einen zweiten Kommunikationsknoten (20) umfasst, welcher für den Empfang von optischen Eingangsdateneinheiten von einem Upstream-Kommunikationsknoten und für die Übertragung von optischen Ausgangsdateneinheiten an einen Downstream-Kommunikationsknoten des optischen Transportnetzwerks konfiguriert ist, wobei das Verfahren weiterhin die folgenden Schritte umfasst:
Ermitteln, ob der Overhead-Bereich (5) einer optischen Eingangsdateneinheit an dem besagten zweiten Kommunikationsknoten (20) den eingefügten Indikator, welcher anzeigt, dass der Nutzdatenbereich (6) der besagten optischen Dateneinheit keine gültigen Nutzdaten enthält, umfasst,
und, wenn auf der Basis des eingefügten Indikators ermittelt wurde, dass die an dem besagten zweiten Kommunikationsknoten (20) empfangene Eingangsdateneinheit keine gültigen Nutzdaten enthält, Reduzieren oder Ausschalten der verfügbaren Datenverarbeitungsressourcen an dem besagten zweiten Kommunikationsknoten (20).

3. Verfahren nach Anspruch 1 oder 2, weiterhin an dem ersten (10) und/oder an dem zweiten (20) Kommunikationsknoten den folgenden Schritt umfassend: Einfügen eines vorgegebenen Blocks von Leerlaufrahmen (90) in den Nutzdatenbereich (6) einer optischen Dateneinheit, welche den eingefügten Indikator in dem Overhead-Bereich (5) umfasst.

4. Verfahren nach Anspruch 3, wobei der vorgegebene Block von Leerlaufrahmen (90) in eine anwendungsspezifische integrierte Schaltung oder eine feldprogrammierbare Gattet-Anordnung des ersten (10) und/oder des zweiten (20) Kommunikationsknoten programmiert wird.

5. Verfahren nach Anspruch 3 oder 4, wobei der besagte vorgegebene Block von Leerlaufrahmen (90) in einen Nutzdatenbereich (6) der optischen Dateneinheit an einer Ausgangsleitungskarte (70) des ersten (10) und/oder des zweiten (20) Kommunikationsknoten des optischen Transportnetzwerks (1) eingefügt wird.

6. Verfahren nach einem beliebigen der vorstehenden Ansprüche, wobei das Ermitteln, ob momentan Eingangspaketdaten von der Client-Schnittstelle an dem besagten ersten Kommunikationsknoten (10) empfangen werden oder nicht, auf der Basis eines von einem Client-Router oder Switch (2) empfangenen Signals, welches einen Übergang des Client-Routers (2) oder Switch in einen Energiesparmodus oder eine Laserabschaltung anzeigt, erfolgt.

7. Verfahren nach einem beliebigen der vorstehenden Ansprüche 1 bis 6, wobei das Ermitteln, ob momentan Eingangspaketdaten von der Client-Schnittstelle an dem besagten ersten Kommunikationsknoten (10) empfangen werden oder nicht, auf der Basis eines Paketzählers oder einer Messeinheit (52) an der besagten ersten Kommunikationseinheit (10) erfolgt.

8. Verfahren nach einem beliebigen der vorstehenden Ansprüche, wobei das optische Transportnetzwerk (1) einen dritten Kommunikationsknoten (30) umfasst, welcher für die Bereitstellung einer Schnittstelle zwischen dem optischen Transportnetzwerk (1) und einem empfangenden Client (2) konfiguriert ist, wobei das Verfahren die folgenden Schritte umfasst:
Ermitteln, ob der Overhead-Bereich (5) einer optischen Eingangsdateneinheit an dem besagten dritten Kommunikationsknoten (30) den eingefügten Indikator, welcher anzeigt, dass der Nutzdatenbereich (6) der besagten optischen Dateneinheit keine gültigen Nutzdaten enthält, umfasst oder nicht;
wobei, wenn auf der Basis des eingefügten Indikators ermittelt wurde, dass die an dem besagten dritten Kommunikationsknoten (30) empfangene optische Eingangsdateneinheit keine Nutzdaten enthält, kein Demapping der Rahmen der an dem besagten dritten Kommunikationsknoten (30) empfangenen optischen Dateneinheit durchgeführt wird und keine Ausgangspaketdaten erzeugt werden;
und wenn auf der Basis des eingefügten Indikators ermittelt wurde, dass die empfangene optische Eingangsdateneinheit keine Nutzdaten enthält, Reduzieren oder Ausschalten von verfügbaren Datenverarbeitungsressourcen an dem besagten dritten Kommunikationsknoten (30).

9. Verfahren nach einem beliebigen der vorstehenden Ansprüche, wobei das besagte Reduzieren oder Ausschalten von verfügbaren Datenverarbeitungsressourcen an dem besagten ersten (10) und/oder zweiten (20) und/oder dritten (30) Kommunikationsknoten das Ausschalten mindestens eines der folgenden umfasst: Zugreifen auf einen externen Packet-RAM (67, 77), Erzeugen eines Leerlaufrahmens in einem optischen Eingangsdateneinheit-Mapper (63), Durchführen von Leistungs- oder Fehlerüberwachung, Transportieren des Containers der optischen Dateneinheit durch den Kommunikationsknoten und über eine Rückwandplatine (60) des Kommunikationsknotens an einen Switch und zurück, Zuteilen von Switch-Speicher und Verarbeiten der Nutzdaten in einem optischen Ausgangsdateneinheit-Mapper (73).

10. Verfahren nach einem beliebigen der vorstehenden Ansprüche,
wobei ein erster Indikator (61) und ein zweiter Indikator (62) verwendet werden, um anzuzeigen, dass der Nutzdatenbereich (6) der besagten optischen Dateneinheit keine gültigen Nutzdaten enthält, wobei der besagte zweite Indikator anstelle des ersten Indikators (61) in den Overhead-Bereich (5) eingefügt wird, nachdem ermittelt wurde, dass während einer vorgegebenen Zeitspanne keine Eingangsdaten an dem besagten ersten Kommunikationsknoten (10) empfangen worden sind;
wobei der besagte zweite (20) und/oder dritte (30) Kommunikationsknoten von einem normalen Datenverarbeitungsmodus in einen ersten Energiesparmodus umschalten, um Datenverarbeitungsressourcen zu reduzieren oder auszuschalten, wenn es sich bei dem besagten eingefügten Indikator um den ersten Indikator (61) handelt, und der zweite (20) und/oder dritte (30) Kommunikationsknoten von einem ersten Energiesparmodus in einen zweiten Energiesparmodus umschalten, um zusätzliche Datenverarbeitungsressourcen noch weiter zu reduzieren oder auszuschalten, wenn es sich bei dem eingefügten Indikator um den zweiten Indikator (62) handelt.

11. Verfahren nach Anspruch 10, wobei nach der Ermittlung, dass es sich bei dem eingefügten Indikator um den zweiten Indikator (62) handelt, parallele Verarbeitungsressourcen in dem besagten ersten (10), zweiten (20) und/oder dritten (30) Kommunikationsknoten ausgeschaltet werden.

12. Verfahren nach einem beliebigen der vorstehenden Ansprüche, wobei, wenn ermittelt wurde, dass Eingangsdaten an dem besagten ersten Kommunikationsknoten (10) oder eine optische Eingangsdateneinheit an dem besagten zweiten (20) oder dritten (30) Kommunikationsknoten keine gültigen Nutzdaten enthalten, der Kommunikationsknoten keinen Nutzdatenbereich mit leeren Rahmen von einer Eingangsleitungskarte (50) an eine Ausgangsleitungskarte (70) des Kommunikationsknotens überträgt.

13. Kommunikationsknoten (10) für ein optisches Transportnetzwerk (1), umfassend:
Eine erste Paketschnittstelle für den Empfang von Eingangsdaten von einem Client;
ein optisches Dateneinheit-Mapping-Mittel, welches für die Erzeugung von optischen Dateneinheiten mit einem Overhead-Bereich (5) und einem Nutzdatenbereich (6) konfiguriert ist, wobei Eingangsdaten in Rahmen eingekapselt werden und die besagten Rahmen in optische Dateneinheiten abgebildet werden; und
eine zweite Paketschnittstelle für die Übertragung von optischen Dateneinheiten an einen Downstream-Kommunikationsknoten des optischen Transportnetzwerks (1);
wobei der Kommunikationsknoten (10) dafür konfiguriert ist, zu ermitteln, ob momentan Eingangsdaten empfangen werden oder nicht; und wenn ermittelt wurde, dass momentan keine Eingangsdaten empfangen werden, der Kommunikationsknoten (10) dafür konfiguriert ist, mindestens eine verfügbare Datenverarbeitungsressource an dem Kommunikationsknoten (10) zu reduzieren oder auszuschalten und einen Indikator in den Overhead-Bereich (5) einer optischen Dateneinheit einzufügen, wobei der eingefügte Indikator anzeigt, dass der Nutzdatenbereich (6) der besagten optischen Dateneinheit keine gültigen Nutzdaten enthält.

14. Kommunikationsknoten (20) für ein optisches Transportnetzwerk (1), umfassend:
Eine erste Schnittstelle für den Empfang von optischen Eingangsdateneinheiten von einem Upstream-Kommunikationsknoten, und
eine zweite Schnittstelle für die Übertragung von optischen Ausgangsdateneinheiten an einen Downstream-Kommunikationsknoten des optischen Transportnetzwerks (1);
wobei der besagte Kommunikationsknoten (20) dafür konfiguriert ist, zu ermitteln, ob der Overhead-Bereich (5) einer an dem besagten Kommunikationsknoten (20) empfangenen optischen Eingangsdateneinheit einen Indikator, welcher anzeigt, dass der Nutzdatenbereich (6) der besagten optischen Dateneinheit keine gültigen Nutzdaten enthält, umfasst;
wobei, wenn auf der Basis des Indikators ermittelt wurde, dass die an dem besagten Kommunikationsknoten (20) empfangene optische Eingangsdateneinheit keine gültigen Nutzdaten enthält, der besagte Kommunikationsknoten (20) dafür konfiguriert ist, mindestens eine verfügbare Datenverarbeitungsressource an dem Kommunikationsknoten (20) zu reduzieren oder auszuschalten.

15. Kommunikationsknoten (30) für ein optisches Transportnetzwerk (1), umfassend:
Eine erste Schnittstelle für den Empfang von optischen Dateneinheiten von dem optischen Transportnetzwerk (1), und einem Upstream-Kommunikationsknoten, und
eine zweite Schnittstelle zu einem empfangenden Client (2), und
ein optisches Dateneinheit-Mapping-Mittel;
wobei der besagte Kommunikationsknoten (30) dafür konfiguriert ist, zu ermitteln, ob der Overhead-Bereich (5) einer an dem besagten Kommunikationsknoten (30) empfangenen optischen Eingangsdateneinheit einen Indikator, welcher anzeigt, dass der Nutzdatenbereich (6) der besagten optischen Dateneinheit keine gültigen Nutzdaten enthält, umfasst oder nicht;
wobei, wenn auf der Basis des Indikators ermittelt wurde, dass die an dem besagten Kommunikationsknoten (30) empfangene optische Eingangsdateneinheit keine gültigen Nutzdaten enthält, das optische Dateneinheit-Mapping-Mittel dafür konfiguriert ist, kein Demapping der Rahmen der empfangenen optischen Dateneinheit durchzuführen und keine Ausgangsdaten zu erzeugen;
wobei, wenn auf der Basis des Indikators ermittelt wurde, dass die an dem besagten Kommunikationsknoten (30) empfangene optische Eingangsdateneinheit keine gültigen Nutzdaten enthält, der besagte Kommunikationsknoten (30) dafür konfiguriert ist, mindestens eine verfügbare Datenverarbeitungsressource an dem besagten Kommunikationsknoten (30) zu reduzieren oder auszuschalten.

## Revendications

1. Procédé pour réduire la consommation d'énergie d'un réseau de transport optique (1) présentant un premier noeud de communication (10) du réseau de transport optique (1) configuré pour fournir une interface entre un client (2) et le réseau de transport optique (1), dans lequel des unités de données optiques comprenant une zone de surdébit (5) et une zone de charge utile (6) sont générées et dans lequel des données par paquets d'entrée sont encapsulées dans des trames et lesdites trames sont mappées dans les unités de données optiques ; le procédé comprenant les étapes suivantes :
déterminer, au niveau dudit premier noeud de communication (10), si les données par paquets d'entrée sont ou non en cours de réception ;
s'il a été déterminé qu'aucune donnée par paquet d'entrée n'est en cours de réception au niveau dudit premier noeud de communication (10), réduire ou désactiver les ressources de traitement de données disponibles au niveau dudit premier noeud de communication (10) et insérer un indicateur dans la zone de surdébit (5) d'une unité de données optiques, dans laquelle l'indicateur inséré indique que la zone de charge utile (6) de ladite unité de données optiques ne contient aucune donnée de charge utile valide.

2. Procédé selon la revendication 1, le réseau de transport optique (1) comprenant un deuxième noeud de communication (20) configuré pour recevoir des unités de données optiques d'entrée à partir d'un noeud de communication de liaison montante et pour transmettre des unités de données optiques de sortie à un noeud de communication de liaison descendante du réseau de transport optique, le procédé comprenant en outre les étapes suivantes :
déterminer si la zone de surdébit (5) d'une unité de données optiques d'entrée au niveau dudit deuxième noeud de communication (20) comprend l'indicateur inséré qui indique que la zone de charge utile (6) de ladite unité de données optiques ne contient aucune donnée de charge utile valide,
dans lequel s'il a été déterminé, selon l'indicateur inséré, que l'unité de données optiques d'entrée reçue au niveau dudit deuxième noeud de communication (20) ne contient aucune donnée de charge utile valide, réduire ou désactiver les ressources de traitement de données disponibles au niveau dudit deuxième noeud de communication (20).

3. Procédé selon la revendication 1 ou 2, comprenant en outre au niveau du premier noeud de communication (10) et/ou du deuxième noeud de communication (20) l'étape suivante : insérer un bloc prédéterminé de trames inactives (90) dans la zone de charge utile (6) d'une unité de données optiques qui comprend l'indicateur inséré dans la zone de surdébit (5).

4. Procédé selon la revendication 3, dans lequel le bloc prédéterminé de trames inactives (90) est programmé dans un circuit intégré spécifique à l'application ou un réseau prédiffusé programmable par l'utilisateur du premier noeud de communication (10) et/ou du deuxième noeud de communication (20).

5. Procédé selon la revendication 3 ou 4, dans lequel le bloc prédéterminé de trames inactives (90) est inséré dans la zone de charge utile (6) de l'unité de données optiques au niveau d'une carte de lignes de sortie (70) du premier noeud de communication (10) et/ou du deuxième noeud de communication (20) du réseau de transport optique (1).

6. Procédé selon l'une quelconque des revendications précédentes, dans lequel le fait que les données par paquets d'entrée provenant de l'interface client sont ou non en cours de réception au niveau dudit premier noeud de communication (10) est déterminé en fonction d'un signal reçu provenant d'un routeur client ou d'un commutateur (2) indiquant une transition vers un mode d'économie d'énergie ou une extinction du laser du routeur client (2) ou du commutateur.

7. Procédé selon l'une quelconque des revendications précédentes 1 à 6, dans lequel le fait que les données par paquets d'entrée provenant de l'interface client sont ou non en cours de réception au niveau dudit premier noeud de communication (10) est déterminé en fonction d'un compteur de paquets ou d'une unité de dosage (52) au niveau de ladite première unité de communication (10).

8. Procédé selon l'une quelconque des revendications précédentes, le réseau de transport optique (1) comprenant un troisième noeud de communication (30) configuré pour fournir une interface entre le réseau de transport optique (1) et un client de réception (2), le procédé comprenant les étapes suivantes :
déterminer si la zone de surdébit (5) d'une unité de données optiques d'entrée au niveau dudit troisième noeud de communication (30) comprend ou non l'indicateur inséré qui indique que la zone de charge utile (6) de ladite unité de données optiques ne contient aucune donnée de charge utile valide ;
dans lequel s'il a été déterminé, selon l'indicateur inséré, que l'unité de données optiques d'entrée reçue au niveau dudit troisième noeud de communication (30) ne contient aucune donnée de charge utile, aucun démappage des trames de l'unité de données optiques reçue au niveau dudit troisième noeud de communication (30) n'est réalisé et aucune donnée par paquet de sortie n'est générée ;
dans lequel s'il a été déterminé, selon l'indicateur inséré, que l'unité de données optiques d'entrée reçue ne contient aucune donnée de charge utile, réduire ou désactiver les ressources de traitement de données disponibles au niveau dudit troisième noeud de communication (30).

9. Procédé selon l'une quelconque des revendications précédentes, dans lequel ladite réduction ou désactivation de ressources de traitement de données disponibles au niveau dudit premier noeud de communication (10) et/ou dudit deuxième noeud de communication (20) et/ou dudit troisième noeud de communication (30) comprend la désactivation d'au moins une action parmi : accéder à la RAM de paquet externe (67, 77), générer une trame inactive dans un dispositif de mappage d'unité de données optiques d'entrée (63), effectuer une surveillance de performances ou de pannes, transporter le conteneur d'unités de données optiques à travers le noeud de communication et sur un fond de panier (60) du noeud de communication vers un commutateur et dans le sens contraire, allouer une mémoire de commutation et traiter les données de charge utile dans un dispositif de mappage d'unité de données optiques de sortie (73).

10. Procédé selon l'une quelconque des revendications précédentes,
dans lequel un premier indicateur (61) et un deuxième indicateur (62) sont utilisés pour indiquer que la zone de charge utile (6) de ladite unité de données optiques ne contient aucune donnée de charge utile valide, dans lequel ledit deuxième indicateur est inséré dans la zone de surdébit (5) au lieu du premier indicateur (61) après qu'il a été déterminé qu'aucune donnée d'entrée n'a été reçue au niveau dudit premier noeud de communication (10) pendant une période prédéterminée ;
dans lequel le deuxième noeud de communication (20) et/ou le troisième noeud de communication (30) passe/passent d'un mode de traitement de données normal à un premier mode d'économie d'énergie pour réduire ou pour désactiver des ressources de traitement de données si ledit indicateur inséré est le premier indicateur (61), et le deuxième noeud de communication (20) et/ou le troisième noeud de communication (30) passe/passent d'un premier mode d'économie d'énergie à un deuxième mode d'économie d'énergie pour réduire davantage ou pour désactiver des ressources de traitement de données supplémentaires si ledit indicateur inséré est le deuxième indicateur (62).

11. Procédé selon la revendication 10, dans lequel lorsque l'on détermine que l'indicateur inséré est le deuxième indicateur (62), désactiver des ressources de traitement parallèles dans ledit premier noeud de communication (10), ledit deuxième noeud de communication (20) et/ou ledit troisième noeud de communication (30).

12. Procédé selon l'une quelconque des revendications précédentes, dans lequel s'il a été déterminé que des données d'entrée au niveau dudit premier noeud de communication (10) ou que l'unité de données optiques d'entrée au niveau dudit deuxième noeud de communication (20) ou dudit troisième noeud de communication (30) ne comprennent/comprend aucune donnée de charge utile valide, le noeud de communication ne transmet pas une zone de charge utile avec des trames vides entre une carte de lignes d'entrée (50) et une carte de lignes de sortie (70) du noeud de communication.

13. Noeud de communication (10) pour un réseau de transport optique (1), comprenant :
une première interface de paquets pour recevoir des données de sortie d'un client ;
un moyen de mappage d'unité de données optiques configuré pour générer des unités de données optiques comprenant une zone de surdébit (5) et une zone de charge utile (6), dans lequel des données d'entrée sont encapsulées dans des trames et lesdites trames sont mappées dans les unités de données optiques ; et
une deuxième interface pour transmettre des unités de données optiques à un noeud de communication de liaison descendante du réseau de transport optique (1) ;
dans lequel le noeud de communication (10) est configuré pour déterminer si des données d'entrée sont ou non en cours de réception ; et s'il a été déterminé qu'aucune donnée d'entrée n'est en cours de réception, le noeud de communication (10) est configuré pour réduire ou désactiver au moins une ressource de traitement de données disponible au niveau du premier noeud de communication (10) et pour insérer un indicateur dans la zone de surdébit (5) d'une unité de données optiques, dans lequel l'indicateur inséré indique que la zone de charge utile (6) de ladite unité de données optiques ne contient aucune donnée de charge utile valide.

14. Noeud de communication (20) pour un réseau de transport optique (1), comprenant une première interface pour recevoir des unités de données optiques d'entrée à partir d'un noeud de communication de liaison montante et une deuxième interface pour transmettre des unités de données optiques de sortie vers un noeud de communication de liaison descendante du réseau de transport optique (1) ;
ledit noeud de communication (20) étant configuré pour déterminer si la zone de surdébit (5) d'une unité de données optiques d'entrée reçue au niveau dudit noeud de communication (20) comprend un indicateur qui indique que la zone de charge utile (6) de ladite unité de données optiques ne contient aucune donnée de charge utile valide ;
dans lequel s'il a été déterminé, selon l'indicateur, que l'unité de données optiques d'entrée reçue au niveau dudit noeud de communication (20) ne contient aucune donnée de charge utile valide, ledit noeud de communication (20) est configuré pour réduire ou désactiver au moins une ressource de traitement de données disponible au niveau dudit noeud de communication (20).

15. Noeud de communication (30) pour un réseau de transport optique (1), comprenant une première interface pour recevoir des unités de données optiques à partir du réseau de transport optique (1) et une deuxième interface vers un client de réception (2) et un moyen de mappage d'unité de données optiques ;
ledit noeud de communication (30) étant configuré pour déterminer si la zone de surdébit (5) d'une unité de données optiques d'entrée reçue au niveau dudit noeud de communication (30) comprend ou non un indicateur qui indique que la zone de charge utile (6) de ladite unité de données optiques ne contient aucune donnée de charge utile valide ;
dans lequel s'il a été déterminé, selon l'indicateur, que l'unité de données optiques d'entrée reçue au niveau dudit noeud de communication (30) ne contient aucune donnée de charge utile, le moyen de mappage d'unité de données optiques est configuré pour ne pas démapper les trames de l'unité de données optiques reçue et pour ne pas générer de données de sortie ;
dans lequel s'il a été déterminé, selon l'indicateur, que l'unité de données optiques d'entrée reçue au niveau dudit noeud de communication (30) ne contient aucune donnée de charge utile, ledit noeud de communication (30) est configuré pour réduire ou désactiver au moins une ressource de traitement de données disponible au niveau dudit troisième noeud de communication (30).
